# EUROPÄISCHE PATENTANMELDUNG

(11) **EP 4 293 228 A1**
(43) Veröffentlichungstag der Anmeldung: **20.12.2023**
(21) Anmeldenummer: 22179017.3
(22) Anmeldetag: 14.06.2022
(51) Int. Cl.: F04B 51/00, F04B 49/10, F04B 49/06

(54) **VERFAHREN ZUR PROGNOSE DER RESTNUTZUNGSDAUER EINER DICHTUNGSANORDNUNG EINES KOLBENVERDICHTERS**

(71) Anmelder: Burckhardt Compression AG, 8404 Winterthur (CH)
(72) Erfinder: Bey, Alina, 8404 Winterthur (CH)
(74) Vertreter: Hepp Wenger Ryffel AG

(57) **Zusammenfassung**

Computerimplementiertes Verfahren zur Prognose der Restnutzungsdauer einer Dichtungsanordnung (10) eines Kolbenverdichters (11), wobei das Verfahren die folgenden Schritte umfasst: a) Bereitstellung von Schwingungsdaten (1a) oder daraus berechenbaren Merkmalen (1b) des hin- und hergehenden Teils (12) des Kolbenverdichters (11); b) Erstellen einer Eingabematrix (3) aus den Schwingungsdaten (1a) oder den daraus berechenbaren Merkmalen (1b); c) Durchführung einer Simulation umfassend eine Mehrzahl von Simulationsschritten unter Anwendung eines Modells (4), mit dem die Fehlerfortpflanzung in einem abgeschlossenen System beschrieben werden kann, auf die Eingabematrix (3), wobei jeder Simulationsschritt eine Ausgabematrix (5) ergibt, und wobei die Ausgabematrix (5) des n-ten Simulationsschritts als Eingabematrix (3') des n+1-ten Simulationsschritts verwendet wird; f) Auswahl genau einer Kenngrösse (6c) aus den Werten der Ausgabematrizen (5, 5'); g) Feststellung der Anzahl an Simulationsschritten, welche durchgeführt werden müssen, bis die ausgewählte Kenngrösse (6c) einen vordefinierten Schwellenwert (8a) nahe null unterschreitet, und Ausgabe dieser Anzahl in einer Zeiteinheit als Ergebnis (9) der durchgeführten Simulation; h) Wiederholung der Verfahrensschritte a) bis g) in regelmässigen diskreten Zeitabständen zum Erhalt einer Vielzahl von Simulationsergebnissen (9, 9'); und i) Anpassen einer Kurve an die erhaltenen Simulationsergebnisse (9, 9') und Berechnung des Zeitpunkts (7), zu dem die Kurve eine vordefinierte untere Schranke (8c) schneidet, wobei der berechnete Schnittpunkt als Indikator für das Eintreten einer Fehlfunktion und das prognostizierte Ende der Nutzungsdauer der Dichtungsanordnung (10) angesehen wird.

## Beschreibung

Die vorliegende Erfindung betrifft ein Verfahren zur Feststellung des Abnutzungsgrades sowie zur Prognose der Restnutzungsdauer einer Dichtungsanordnung eines Kolbenverdichters, ein vorbeugendes Instandhaltungssystem für einen Kolbenverdichter, einen Kolbenverdichter umfassend ein vorbeugendes Instandhaltungssystem, ein computerlesbares Speichermedium, sowie die Verwendung des Verfahrens zur Überwachung der Degradation einer Dichtungsanordnung eines Kolbenverdichters und/oder zur Prognose der Restnutzungsdauer einer Dichtungsanordnung eines Kolbenverdichters und/oder zum Nachstellen der an einer Dichtungsanordnung eines Kolbenverdichters auftretenden Leckage.

Die Zustandsüberwachung ist der Prozess der Überwachung eines Zustandsparameters (Vibration, Temperatur usw.) in Maschinen, um eine signifikante Änderung zu identifizieren, die auf einen sich entwickelnden Fehler hinweist. Sie ist ein Hauptbestandteil der vorausschauenden Wartung, welche auch unter den Begriffen "vorbeugende Instandhaltung", "Preventive Maintenance" und "Predictive Maintenance" bekannt ist. Durch die vorbeugende Instandhaltung können Wartungsarbeiten geplant oder andere Massnahmen ergriffen werden, um den unerwarteten Stillstand der Maschine oder Folgeschäden und deren Konsequenzen zu vermeiden. Dadurch können die Verfügbarkeiten der Produktionsanlagen verbessert und gleichzeitig die Ausfallzeiten der Anlagen sowie die Kosten der Instandhaltung reduziert werden.

Zur Verdichtung von Fluiden wie Gasen oder Aerosolen werden üblicherweise Kompressoren verwendet. In einem Hubkolbenkompressor wird die mittels einer Antriebseinheit erzeugte Drehbewegung einer Kurbelwelle mit Hilfe von Pleuelstangen in eine hin- und hergehende Bewegung eines oder mehrerer Kolben umgewandelt, welche zum Komprimieren von angesaugtem Gas oder Aerosol in einer Verdichtereinheit genutzt wird. Konstruktionsbedingt ist der Kolben den dabei auftretenden Kräften ausgesetzt, welche den Kolben von einer Geschwindigkeit von null am Ende eines jeden Hubs auf eine hohe Geschwindigkeit in der Mitte des Hubs und wieder zurück auf null beschleunigen. Über zumindest einen Teil des Verdichtungszyklus wird der Verdichtungsraum dabei von geschlossenen Zylinderventilen abgedichtet, bevor das verdichtete Gas oder Aerosol durch Öffnung wenigstens eines Zylinderventils an eine Ausgabevorrichtung abgegeben wird. Durch ihre Bewegungen unterliegen diese Ventile einem gewissen Verschleiss. Zur Abdichtung des kurbelseitigen Arbeitsraumes werden an der sich bewegenden Kolbenstange Kolbenstangendichtsysteme, sogenannte Packungen, eingesetzt. Durch das Anliegen der Dichtelemente an der oszillierenden Kolbenstange unterliegen diese einem ständigen Verschleiss.

Der ungewünschte Austritt des zu komprimierenden Gases oder Aerosols aus der Verdichtereinheit, insbesondere aufgrund der verschleissbedingten Undichtigkeit der vorgehend beschriebenen Dichtelemente und/oder Zylinderventile, wird gemeinhin als Leckage bezeichnet. Zur Messung der Leckage - und damit zur Beurteilung der Funktionstüchtigkeit der Verdichtereinheit - können entsprechende Sensoren verwendet werden, die idealerweise an jeder einzelnen Verdichtereinheit bzw. Stufe des Kompressors angeordnet sind. Derartige Sensoren sind jedoch aus Kostengründen oftmals nicht am Kompressor vorgesehen und/oder erfassen und übertragen die von ihnen gemessenen Leckagewerte nicht immer automatisch.

Aus der EP 2 458 214 A1 ist ein Verfahren zur Überwachung des Betriebs eines Hubkolbenkompressors mit einem Drucksensor und einem Schwingungssensor bekannt. Basierend auf dem erfassten Druck innerhalb der Vorrichtung und den erfassten Vibrationen der hin- und hergehenden Vorrichtung des Kompressors berechnet das darin beschriebene Schutzsystem einen Steifigkeitswert der Zylinderbaugruppe und ermöglicht so die Beurteilung der strukturellen Integrität derselben im laufenden Betrieb. Das Schutzsystem ermöglicht ferner die Abschaltung des Kompressors, nachdem festgestellt wurde, dass der Zustand des Kompressors von einem vordefinierten Normzustand abweicht.

Die EP 3 436 877 A1 betrifft ein Verfahren sowie eine Vorrichtung zur Durchführung eines Verfahrens zur schwingungsdiagnostischen Überwachung und Beurteilung von einzelnen Maschinenteilen. Dabei wird wenigstens ein Zeitsignal der Schwingung der Maschine erfasst und mittels einer Frequenzanalyse durch einen Frequenzanalysator ausgewertet. Bestimmten Maschinenteilen werden anschliessend aus dem Frequenzspektrum extrahierte Frequenzmaxima zugeordnet, welche mit Sollwertdaten, Modelldaten und/oder Referenzdaten der jeweiligen Maschinenteile verglichen werden. Bei Abweichung der extrahierten Frequenzmaxima, welche aus den aktuell gemessenen Schwingungsdaten ermittelt werden, von den Sollwertdaten, den Modelldaten und/oder den Referenzdaten der Maschinenteile erfolgt die Ausgabe einer Beurteilungsinformation bzw. Warnmeldung.

Nachteilig an den vorstehend genannten Verfahren und Systemen ist allerdings der Umstand, dass der Benutzer erst benachrichtigt wird, wenn einer der berechneten Werte vom Idealwert abweicht. Eine Echtzeitübermittlung der Restlebensdauer und eine Angabe des Abnutzungsgrades der Dichtungselemente des Kompressors sind mit diesen Verfahren und System nicht möglich. Folglich besteht nach wie vor Bedarf an Verfahren und Systemen, mit denen auch genaue Vorhersagen über den zukünftigen Zustand und den Zeitpunkt des Ausfalls von Maschinenteilen wie Dichtungselementen getroffen werden können. Ferner ist es bei der vorbeugenden Instandhaltung immer wieder der Fall, dass Teile ausgetauscht werden, die noch über eine hohe Restlebensdauer verfügen. Ein solcher, verfrühter Austausch verursacht unnötige Kosten und ist wenig nachhaltig.

Ausgehend von dem genannten Stand der Technik liegt der vorliegenden Erfindung die Aufgabe zugrunde, solche und weitere Nachteile des Standes der Technik zu beheben und insbesondere ein Verfahren bereitzustellen, mit dem der Abnutzungsgrad einer Dichtungsanordnung eines Kolbenverdichters festgestellt sowie deren Restnutzungsdauer kostengünstig und zuverlässig vorhergesagt werden kann.

Die Aufgabe wird durch ein Verfahren, ein vorbeugendes Instandhaltungssystem für einen Kolbenverdichter, einen Kolbenverdichter, ein computerlesbares Speichermedium, sowie die Verwendung des Verfahrens zur Überwachung der Degradation einer Dichtungsanordnung eines Kolbenverdichters und/oder zur Prognose der Restnutzungsdauer einer Dichtungsanordnung eines Kolbenverdichters und/oder zum Nachstellen der an einer Dichtungsanordnung eines Kolbenverdichters auftretenden Leckage gemäss den unabhängigen Patentansprüchen gelöst. Vorteilhafte Ausgestaltungen und Weiterbildungen sind Gegenstand der abhängigen Ansprüche.

Die Aufgabe wird insbesondere gelöst mit einem computerimplementierten Verfahren zur Feststellung des Abnutzungsgrades sowie zur Prognose der Restnutzungsdauer einer Dichtungsanordnung eines Kolbenverdichters. Das Verfahren umfasst dabei die nachfolgend aufgeführten Schritte a) bis h):
a) Bereitstellung von Schwingungsdaten des hin- und hergehenden Teils des Kolbenverdichters. Alternativ ist es auch denkbar, dass aus Schwingungsdaten berechenbare Merkmale (englisch: Features) im erfindungsgemässen Verfahren verwendet werden. Die Schwingungsdaten oder daraus berechenbaren Merkmale müssen sich auf bestimmte Positionen (Segmente M) der Bewegung des hin- und hergehenden Teils des Kolbenverdichters zurückführen lassen.
b) Erstellen einer Eingabematrix aus den Schwingungsdaten oder den daraus berechenbaren Merkmalen. Die Eingabematrix weist dabei eine durch die Anzahl der Segmente M und die Anzahl von Abtastzeitpunkten N bestimmte Dimension (M x N) auf.
c) Durchführung einer Simulation umfassend eine Mehrzahl von Simulationsschritten unter Anwendung eines Modells, mit dem die Fehlerfortpflanzung in einem abgeschlossenen System beschrieben werden kann, auf die Eingabematrix. Jeder Simulationsschritt erzeugt eine Ausgabematrix. Die Ausgabematrix des n-ten Simulationsschritts wird dabei als Eingabematrix des n+1-ten Simulationsschritts verwendet.
d) Optional, Bildung der Laplace Matrix zu jeder Ausgabematrix und Berechnung der Eigenwerte der jeweiligen Laplace Matrix. Die Laplace Matrix kann dabei insbesondere durch Multiplizieren der jeweiligen Ausgabematrix mit ihrer transponierten Matrix erhalten werden.
e) Optional, Berechnung der normierten Distanz der Ausgabematrix zur Ausgabematrix des vorherigen Simulationsschrittes.
f) Auswahl genau einer Kenngrösse, entweder aus Werten der Ausgabematrizen, aus den berechneten Eigenwerten der im optionalen Schritt d) gebildeten Laplace Matrizen oder aus den im optionalen Schritt e) berechneten normierten Distanzen. Die ausgewählte Kenngrösse stellt dabei ein Mass für die Synchronisation der auf die Segmente M zurückführbaren Schwingungsdaten oder daraus berechenbaren Merkmale dar.
g) Feststellung der Anzahl an Simulationsschritten, welche bis zur Unterschreitung eines vordefinierten Schwellenwertes nahe null durch die ausgewählte Kenngrösse durchgeführt werden müssen. Dieses Ergebnis der durchgeführten Simulation, also die festgestellte Anzahl an Simulationsschritten, wird in eine Zeiteinheit umgerechnet, basierend auf der Abtastrate der in der Eingabematrix verwendeten Schwingungsdaten oder den daraus berechenbaren Merkmalen.
h) Wiederholung der vorstehend beschriebenen Verfahrensschritte a) bis g) in regelmässigen diskreten Zeitabständen zum Erhalt einer Vielzahl von Simulationsergebnissen.
i) Nach jeder neuen Simulation wird unter Berücksichtigung der vergangenen Simulationsergebnisse eine Kurve an die erhaltenen Simulationsergebnisse angepasst, insbesondere mittels lokaler linearer Regression oder eines anderen geeigneten Verfahrens, und der Zeitpunkt in der Zukunft ermittelt, zu dem die Kurve eine vordefinierte unteren Schranke schneidet. Bei der unteren Schranke handelt es sich insbesondere um die durch den Nullpunkt eines kartesischen Koordinatensystems verlaufende Abszissenachse (x-Achse). Der berechnete Zeitpunkt, zu dem die an die Simulationsergebnisse angepasste Kurve die untere Schranke schneidet, wird als Indikator für das Eintreten einer Fehlfunktion, insbesondere für einen Totalausfall, und das prognostizierte Ende der Nutzungsdauer der Dichtungsanordnung angesehen.

Im Rahmen der vorliegenden Erfindung wird unter dem Begriff "Abtastzeitpunkt" derjenige Zeitpunkt verstanden, an dem ein Wert, insbesondere ein Schwingungsdatenwert oder der Wert eines daraus berechenbaren Merkmals, gemessen oder berechnet wird.

Der Begriff "Dichtungsanordnung" meint im Rahmen der vorliegenden Erfindung insbesondere eine eine Kolbenstange abdichtende Kolbenstangenpackung und/oder ein einen Verdichtungsraum abdichtendes Zylinderventil.

Die Grösse des vordefinierten Schwellenwerts hängt von den Eingabedaten ab, d.h. von den Schwingungsdaten oder den daraus berechenbaren Merkmalen, und liegt nahe null, da die Annäherung der zweitkleinsten Eigenwerte an null eine hohe Systeminstabilität nahelegen.

Die vorliegende Erfindung beruht auf der Erkenntnis, dass sich Leckagen auf die am Kompressor gemessenen Schwingungen auswirken. Insbesondere führen gebrochene Packungs- oder Führungsringe neben einer erhöhten Leckage auch zu einer Verschiebung bzw. Abweichung der Kolbenstange und des Kolbens von ihrer Idealbewegung, erhöhter Reibung und Vibrationen in den betreffenden Segmenten der Kolbenbewegung. Da die Beschleunigungskräfte des Kolbens in der Mitte der Kolbenbewegung am grössten sind, ist in diesem Bereich auch die Verschiebung grösser und macht sich durch verstärkte Vibrationen bemerkbar. Beim Auftreten erhöhter Leckage nimmt diese Verschiebung weiter zu und geht mit erhöhten Vibrationen einher, die sich über mehrere benachbarte Segmente der Kolbenbewegung hinweg zum Ende des Hubs hin ausbreiten.

Dies spiegelt sich in der Simulationsphase der vorliegenden Erfindung wider, in welcher die Geschwindigkeit der Ausbreitung eines Fehlers in Richtung Hubende simuliert wird. Die Zuordnung der gemessenen Schwingungen zu Segmenten der Bewegung des hin-und hergehenden Teils des Kolbenverdichters, insbesondere also zu einer bestimmten Position des Kolbens, ist ein notwendiger Vorverarbeitungsschritt um sicherzustellen, dass die Eingabematrix eine zweidimensionale Darstellung der über einen vollen Zyklus der hin- und hergehenden Vorrichtung gemessenen Schwingungen ist. Ohne sich darauf einschränken zu wollen wird davon ausgegangen, dass das Schwingungsmuster über die Bewegung der hin- und hergehenden Vorrichtung, insbesondere über die Kolbenbewegung, die thermodynamischen Prozesse im Inneren des Zylinders darstellt. Diese Hypothese wird durch Informationen von Experten der manuellen Maschinendiagnose gestützt, die das Einhergehen einer möglichen Leckage oder erhöhten Reibung in Segmenten mit einer gleichmässigen und parallelen Zunahme der Schwingungsspitzen in diesen Segmenten berichten.

Im Rahmen der vorliegenden Erfindung werden die in den jeweiligen Segmenten der Kolbenbewegung auftretenden Schwingungen und ihre Fortpflanzung auf benachbarte Segmente als miteinander wechselwirkende Teilchen betrachtet. Aufgrund der zeitlichen Entwicklung der Vibrationen kann zur Beschreibung der Dynamik zwischen den Teilchen beispielsweise das zeitabhängige Ginzburg-Landau-Modell (TDGL) herangezogen werden, welches eine Abwandlung des kinetischen Ising-Modells, bei dem diskrete Variablen die Zustände der magnetischen Spins (-1, +1) der Teilchen darstellen, darstellt. Die freie Energie eines solchen Systems wird geschätzt, indem man die Änderung des Ordnungsparameters beobachtet (G. Gaspari, Physical Review B 1986, 33(5), 3295-3305).

Das erfindungsgemässe Verfahren stellt im Grunde genommen einen hybriden digitalen Sensor dar, welcher Vibrationsdaten benutzt, um die Funktion bzw. die Messung eines Leckagesensors nachzustellen. Anders ausgedrückt ermöglicht es das erfindungsgemässe Verfahren, die nicht direkt gemessene Leckage über einen anderen Parameter, nämlich Schwingungsdaten oder daraus berechenbare Merkmale, nachzustellen und einen Packungs- oder Ventilschaden vorherzusagen. Das gewählte Verfahren kommt ohne zusätzliche Druck- oder Temperatursensoren, bzw. die Berechnung von dynamischen Drücken aus und ist deshalb kostengünstig in Bezug auf die notwendige Sensorik. Des Weiteren hat sich das erfindungsgemässe Verfahren bezüglich der Genauigkeit des prognostizierten Endes der Nutzungsdauer der Dichtungsanordnung als besonders robust erwiesen, beispielsweise gegenüber einer sich ändernden Auslastung des Kompressors oder sonstigen Schwankungen, die nicht auf Abnutzung zurückzuführen sind.

In einer bevorzugten Ausführungsform des erfindungsgemässen Verfahrens wird der zweitkleinste Eigenwert der Ausgabematrix als Kenngrösse ausgewählt. Der vordefinierte Schwellenwert ist in diesem Fall annähernd null, beispielsweise ein Betrag von 0.000025.

In einer bevorzugten Ausführungsform des erfindungsgemässen Verfahrens wird der Verfahrensschritt d) durchgeführt und der zweitkleinste Eigenwert der Laplace Matrix als Kenngrösse ausgewählt. Der vordefinierte Schwellenwert ist in diesem Fall annähernd null, beispielsweise ein Betrag von 0.000025.

Die zweitkleinsten Eigenwerte der Laplace Matrix werden als algebraische Konnektivität oder Fiedler-Eigenvektor bezeichnet (M. Fiedler, Czechoslovak Mathematical Journal 1973, 23(2), 298-305). Diese Metrik spielt eine entscheidende Rolle bei der Synchronisierung gekoppelter Oszillatoren und der Robustheit von Netzwerken, kaskadierenden Ausfällen u.a. (S. Strogatz, Physica D 2000, 143, 1-20). Erreicht die algebraische Konnektivität eines Graphen den Wert null, so ist der Graph in mehr als eine zusammenhängende Komponente aufgespalten, d.h. ein dynamischer Prozess wird sich niemals synchronisieren (Hernändez et al., Journal of Complex Networks 2014, 2(3), 272-287).

Das erfindungsgemässe Verfahren kann einerseits aus der Ferne durchgeführt werden, wobei die am Kompressor gemessenen Schwingungsdaten an eine unabhängige Stelle gesendet und dort ausgewertet werden.

Alternativ ist es in einer weiteren Ausführungsform des erfindungsgemässen Verfahrens auch denkbar, dass die bereitgestellten Schwingungsdaten oder die daraus berechenbaren Merkmale als Teil des durchgeführten Verfahrens erhalten werden. Dazu wird wenigstens ein Zeitsignal x(t) der Schwingung eines hin- und hergehenden Teils des Kolbenverdichters durch wenigstens einen Schwingungssensor erfasst. Optional, können die Merkmale aus dem erfassten Zeitsignal x(t) berechnet werden. Das erfasste Zeitsignal x(t) der Schwingung oder der optional berechneten Merkmale wird anschliessend in eine Mehrzahl von Zeitabschnitten eingeteilt, welche immer derselben Position der hin- und hergehenden Vorrichtung, insbesondere des Kolbens bzw. der Kolbenstange, entsprechen. Für jeden Zeitabschnitt wird dann der Mittelwert des im jeweiligen Zeitabschnitt erfassten Zeitsignals x(t) oder der daraus optional berechneten Merkmale berechnet, um gemittelte Schwingungswerte oder gemittelte Merkmale zu erhalten. Ferner wird die Position des hin- und hergehenden Teils des Kolbenverdichters durch wenigstens einen Positionssensor erfasst und die erfassten Positionsdaten werden zur Durchführung des Verfahrens bereitgestellt. Basierend auf den erfassten Positionsdaten erfolgt eine Unterteilung der Bewegung des hin- und hergehenden Teils in eine Mehrzahl von Segmenten M, welche vorzugsweise gleich gross sind. Schliesslich erfolgt die Zuordnung der gemittelten Schwingungswerte oder der gemittelten Merkmale zu den Segmenten M der Bewegung, und zwar derart, dass die jeweiligen gemittelten Schwingungswerte oder die jeweiligen gemittelten Merkmale stets denselben Segmenten M der Bewegung des hin- und hergehenden Teils entsprechen und sich somit eine Undichtigkeit an einer bestimmten Stelle entsprechend in den Vibrationsdaten niederschlägt. Beispielsweise beträgt der Zeitabschnitt eine Minute, d.h. innerhalb einer Minute wird eine bestimmte Anzahl an Messpunkten in einem bestimmten Segment M der Bewegung des hin-und hergehenden Teils erhalten, welche Messpunkte gemittelt und als Minutenmittelwert des jeweiligen Segments M für die Eingabematrix bereitgestellt werden.

In einer bevorzugten Ausführungsform des erfindungsgemässen Verfahrens erfolgt die Prognose des Zeitpunkts, zu dem die ausgewählte Kenngrösse den vordefinierten Schwellenwert unterschreitet, erst, nachdem die Kenngrösse einen vorbestimmten Kritikalitätswert erreicht. Der Kritikalitätswert markiert dabei das Einsetzen eines unumkehrbaren Verschlechterungsprozesses in der Dichtungsanordnung.

Dadurch lässt sich die Schwankungsbreite der Simulationsergebnisse deutlich reduzieren und damit die Genauigkeit des prognostizierten Zeitpunkts, an dem es tatsächlich zu einer Fehlfunktion der Dichtungsanordnung kommt, erhöhen. Des Weiteren wird dadurch der Beginn der Prognosen Richtung des tatsächlichen Ausfalls verschoben, was die Genauigkeit der Vorhersagen erhöht und das Risiko falsch positiver Vorhersageergebnisse reduziert.

In einer bevorzugten Ausführungsform des erfindungsgemässen Verfahrens handelt es sich bei dem auf die Eingabematrix angewandten Modell um das zeitabhängige Ginzburg-Landau-Modell (TDGL).

Im Rahmen der vorliegenden Erfindung wurde gefunden, dass das zeitabhängige Ginzburg-Landau-Modell (TGDL) als Verallgemeinerung des n-Vektor- und des 2D-Ising-Modells (Gaspari et al., Physical Review B 1986, 33(5), 3295-3305) besonders gut zum vorliegenden experimentellen Kontext passt.

Der Einsatz von Kolbenverdichtern findet oftmals unter Bedingungen statt, welche einen externen Einfluss auf die Schwingungen des sich hin- und her bewegenden Teils des Kolbenverdichters darstellen. Beispielsweise kann es bei der Verwendung von Kolbenverdichtern auf Seefahrzeugen durch das jeweils vorherrschende Wellenbild und die damit einhergehenden Schiffsbewegungen selbst zu Schwingungen kommen, welche sich mit den erfassten Schwingungen am Kolbenverdichter überlagern können.

Um derartige Effekte zu reduzieren, können die bereitgestellten Schwingungsdaten oder die bereitgestellten Merkmale zusätzlich entrauscht werden.

In einer bevorzugten Ausführungsform des erfindungsgemässen Verfahrens werden die bereitgestellten und optional entrauschten Schwingungsdaten oder Merkmale zwischen -1 und +1 normiert, was je nach gewähltem Modell und Verteilung der Schwingungsdaten von Vorteil ist.

In einer bevorzugten Ausführungsform umfasst das erfindungsgemässe Verfahren ferner einen Datenübertragungsschritt zur Übertragung der Schwingungsdaten oder Merkmale an mindestens eine Bodenstation. Zusätzlich oder alternativ dazu ist es auch denkbar, dass das erfindungsgemässe Verfahren einen Datenübertragungsschritt zur Übertragung der prognostizierten Restnutzungsdauer der Dichtungsanordnung an eine Benutzerschnittstelle des Kolbenverdichters umfasst. In beiden Fällen werden wenigstens die Simulationsschritte und die Prognose des Zeitpunkts, zu dem die ausgewählte Kenngrösse einen vordefinierten Schwellenwert unterschreitet, ganz oder teilweise am Boden mit der Bodenstation durchgeführt.

Die Übertragung der am Kolbenverdichter gemessenen Schwingungsdaten an eine Bodenstation ermöglicht es, den Zustand des Kolbenverdichters aus der Ferne zu überwachen, ohne dass dafür sämtliche für die Durchführung des erfindungsgemässen Verfahrens erforderliche Rechenleistung an oder in räumlicher Nähe zum Kolbenverdichter vorhanden sein muss. Ferner ermöglicht es die Übertragung der prognostizierten Restnutzungsdauer der Dichtungsanordnung an eine Benutzerschnittstelle des Kolbenverdichters, beispielsweise an ein Bedienpanel oder eine Signalleuchte des Kolbenverdichters, dass die Benutzer des Kolbenverdichters nicht von einem vermeintlich unvorhersehbaren Ausfall des Kolbenverdichters überrascht werden. Dies kann insbesondere bei der Überwachung von auf Seefahrzeugen eingesetzten Kolbenverdichtern vorteilhaft sein, da hier ein unvorhergesehener Ausfall des Kolbenverdichters ausserhalb von Häfen ein erhebliches Sicherheitsrisiko darstellen kann.

In einer bevorzugten Ausführungsform umfasst das erfindungsgemässe Verfahren ferner die Übermittlung des identifizierten Zeitpunkts und/oder des prognostizierten Endes der Nutzungsdauer der Dichtungsanordnung an einen Benutzer. Diese Übermittlung erfolgt vorzugsweise in Echtzeit. Zusätzlich oder alternativ ist es erfindungsgemäss auch denkbar, den Abnutzungsgrad der Dichtungsanordnung aus dem Verhalten der Kenngrösse über die Anzahl der durchgeführten Simulationsschritte abzuschätzen und den somit erhaltenen Abnutzungsgrad an einen Benutzer zu übermitteln. Auch diese Übermittlung erfolgt vorzugsweise in Echtzeit.

Hierdurch wird ermöglicht, dass der Benutzer des Kolbenverdichters über den Zustand desselben informiert wird und gegebenenfalls rechtzeitig Vorkehrungen für einen allfällig erforderlichen Wartungsunterbruch treffen kann.

In einer bevorzugten Ausführungsform des erfindungsgemässen Verfahrens handelt es sich bei der Dichtungsanordnung um eine gegen eine Kolbenstange abdichtende Kolbenstangenpackung oder um ein einen Kompressionsraum begrenzendes Zylinderventil. Kolbenstangenpackungen und Zylinderventile gehören zu den Teilen eines Kolbenverdichters, deren Beschädigung oder gar Ausfall zu einer ernsthaften Beeinträchtigung des Kompressionsvorgangs führen und damit die Leistungsfähigkeit des Kolbenverdichters verringern.

In einer bevorzugten Ausführungsform des erfindungsgemässen Verfahrens wird die Durchführung des Verfahrens automatisiert gestartet, und zwar zu einem von einem Nutzer wählbaren Zeitpunkt oder in festgelegten Zeitabständen.

Durch diese Automatisierung des Verfahrens lässt sich das Risiko eines unvorhergesehenen Ausfalls des Kolbenverdichters deutlich reduzieren. Andererseits kann dadurch auch die Durchführung herstellerseitig und/oder nutzerseitig vorgeschriebener Wartungsarbeiten kontrolliert werden.

Grundsätzlich können sämtliche der vorstehend angeführten Ausführungsformen miteinander kombiniert werden.

Die Aufgabe wird ferner durch ein vorbeugendes Instandhaltungssystem zur Verwendung mit einem Kolbenverdichter gelöst. Das vorbeugende Instandhaltungssystem umfasst eine Berechnungseinrichtung mit mindestens einem Prozessor. Die Berechnungseinrichtung ist dafür konfiguriert, Positionsdaten eines hin- und hergehenden Teils des Kolbenverdichters zu empfangen, Schwingungsdaten oder daraus berechenbare Merkmale des hin- und hergehenden Teils des Kolbenverdichters zu empfangen, und diese Schwingungsdaten oder Merkmale Segmenten M der Bewegung des hin- und hergehenden Teils des Kolbenverdichters zuzuordnen. Die Berechnungseinrichtung ist ferner dafür konfiguriert, aus den empfangenen Schwingungsdaten oder Merkmalen eine Eingabematrix zu erstellen und eine Vielzahl von Simulationen, welche jeweils eine Mehrzahl von Simulationsschritten umfassen, unter Anwendung eines Modells, mit dem die Fehlerfortpflanzung in einem abgeschlossenen System beschrieben werden kann, auf die Eingabematrix durchzuführen. Hierdurch wird jeweils eine Ausgabematrix erhalten, wobei die Ausgabematrix des n-ten Simulationsschritts als Eingabematrix des n+1-ten Simulationsschritts verwendet wird. Der Abstand zwischen zwei Simulationen entspricht dabei jeweils einer definierten Zeiteinheit. Insbesondere kann der Abstand zwischen zwei Simulationen zwischen einer Minute und sechs Stunden, bevorzugt zwischen einer Minute und vier Stunden, besonders bevorzugt zwischen einer Minute und sechzig Minuten, betragen. Je kleiner der zeitliche Abstand zwischen zwei Simulationen gewählt wird, desto glatter werden die Ergebnisse, wobei der Zeitbedarf bis zum Erhalt der Ergebnisse jedoch steigt. Die Berechnungseinrichtung ist optional ferner dafür konfiguriert, die Laplace Matrix der jeweiligen Ausgabematrix zu bilden und die Eigenwerte der jeweiligen Laplace Matrix zu berechnen oder die normierte Distanz der Ausgabematrix des n+1-ten Simulationsschritts zur Ausgabematrix des n-ten Simulationsschritts zu berechnen. Die Berechnungseinrichtung ist auch dafür konfiguriert, eine Kenngrösse aus den Werten der Ausgabematrizen oder aus den berechneten Eigenwerten der optional gebildeten Laplace Matrizen oder aus den optional berechneten normierten Distanzen auszuwählen. Die ausgewählte Kenngrösse stellt dabei ein Mass für die Synchronisation der auf die Segmente M zurückführbaren Schwingungsdaten oder daraus berechenbaren Merkmalen dar. Die Berechnungseinrichtung ist dafür konfiguriert, als Ergebnis der jeweils durchgeführten Simulation die Anzahl an Simulationsschritten festzustellen, welche durchgeführt werden müssen, bis die ausgewählte Kenngrösse einen vordefinierten Schwellenwert nahe null unterschreitet und diese Anzahl in einer Zeiteinheit auszugeben. Die Zeiteinheit bzw. Simulationszeit berechnet sich aus dem zeitlichen Abstand der in die Eingabematrix eingehenden (gemittelten) Werte, welche aus den Schwingungsdaten generiert werden. Die Berechnungseinrichtung ist auch dafür konfiguriert, eine Kurve an die erhaltenen Simulationsergebnisse anzupassen, und mittels einer geeigneten Methode (lokale lineare Regression beispielweise) den Zeitpunkt in der Zukunft zu berechnen, zu dem die Kurve eine vordefinierte untere Schranke, insbesondere die x-Achse, schneidet und somit den Ausfallzeitpunkt als Datum zu erhalten. Der berechnete Schnittpunkt wird dabei als Indikator für das Eintreten einer Fehlfunktion und das prognostizierte Ende der Nutzungsdauer der Dichtungsanordnung angesehen. Letztlich ist die Berechnungseinrichtung auch dafür konfiguriert, darauf basierend die Restnutzungsdauer der Dichtungsanordnung des Kolbenverdichters auszugeben.

Die Vorteile des erfindungsgemässen vorbeugenden Instandhaltungssystems ergeben sich im Wesentlichen aus den Vorteilen, welche bereits zu dem erfindungsgemässen Verfahren dargelegt wurden.

In einer vorteilhaften Ausführungsform umfasst das erfindungsgemässe vorbeugende Instandhaltungssystem ferner wenigstens einen Positionssensor, welcher zum Erfassen der Position des hin- und hergehenden Teils des Kolbenverdichters ausgebildet und kommunikativ mit der Berechnungseinrichtung gekoppelt ist. Das vorbeugende Instandhaltungssystem umfasst in dieser Ausführungsform ferner wenigstens einen Schwingungssensor, welcher zum Erfassen eines Zeitsignals x(t) der Schwingung eines hin- und hergehenden Teils des Kolbenverdichters ausgebildet und kommunikativ mit der Berechnungseinrichtung gekoppelt ist. Die Berechnungseinrichtung ist dabei dafür konfiguriert, das erfasste Zeitsignal x(t) der Schwingung in eine Mehrzahl von Zeitabschnitten einzuteilen und die gemittelten Schwingungswerte der jeweiligen Zeitabschnitte zu bilden. Darüber hinaus ist die Berechnungseinrichtung dafür konfiguriert, anhand der ermittelten Position die Bewegung des hin- und hergehenden Teils in eine Mehrzahl von, bevorzugt gleich grossen, Segmenten M zu unterteilen und die gemittelten Schwingungswerte zu diesen Segmenten M der Bewegung zuzuordnen.

Dadurch lässt sich der Zustand der Dichtungsanordnung des Kolbenverdichters noch genauer überwachen und die verbleibende Restnutzungsdauer exakter vorhersagen.

In einer bevorzugten Ausführungsform des erfindungsgemässen vorbeugenden Instandhaltungssystems umfassend wenigstens einen Positionssensor ist zumindest einer der Schwingungssensoren am Zylinderkopf oder Kreuzkopf des Kolbenverdichters angeordnet, welcher Zylinderkopf oder Kreuzkopf dem hin- und hergehenden Teil des Kolbenverdichters zugeordnet ist.

Es hat sich herausgestellt, dass die Anordnung des Schwingungssensors am Zylinderkopf besonders zuverlässige Aussagen bezüglich des Zustands und der verbleibenden Restnutzungsdauer der Zylinderventile, insbesondere des Auslassventils, ermöglicht. Andererseits hat sich herausgestellt, dass der Zustand und die verbleibende Restnutzungsdauer einer Kolbenstangenpackung besonders zutreffend durch Anordnung des Schwingungssensors am Kreuzkopf erhalten werden kann.

Die Aufgabe wird ferner durch einen Kolbenverdichter umfassend ein vorgehend beschriebenes vorbeugendes Instandhaltungssystem gelöst.

In einer bevorzugten Ausführungsform ist der Kolbenverdichter als Kolbenverdichter mit vertikaler Kolbenbewegung ausgebildet. Die vertikale Kolbenbewegung sorgt dabei für geringe Abnutzung der Dicht- und Führungselemente. Derartige Kolbenverdichter werden häufig auf Seefahrzeugen eingesetzt.

Die Aufgabe wird ferner durch ein computerlesbares Speichermedium gelöst. Das computerlesbare Speichermedium verkörpert ein Computerprogramm, welches einen computerlesbaren Programmcode umfasst. Der Programmcode ist dazu eingerichtet, wenn er durch mindestens einen Prozessor eines Computers ausgeführt wird, den Prozessor zur Durchführung des hierin beschriebenen Verfahrens zu veranlassen.

Der Begriff "Speichermedium" umfasst im Rahmen der vorliegenden Erfindung insbesondere auch Cloud-Speicher, Flash-Speicher und eingebettete Speicher.

Die Aufgabe wird letztlich durch die Verwendung des hierin beschriebenen Verfahrens zur Überwachung der Degradation einer Dichtungsanordnung eines Kolbenverdichters gelöst. Alternativ oder zusätzlich wird die Aufgabe durch die Verwendung des hierin beschriebenen Verfahrens zur Prognose der Restnutzungsdauer, insbesondere Prognose der verbleibenden Betriebsstunden oder des Austauschdatums, einer Dichtungsanordnung eines Kolbenverdichters gelöst. Als weitere Alternative oder zusätzlich zu den vorstehend genannten Verwendungen wird die Aufgabe durch die Verwendung des hierin beschriebenen Verfahrens zum Nachstellen der an einer Dichtungsanordnung eines Kolbenverdichters auftretenden Leckage gelöst.

Verschiedene Ausführungsformen der Erfindung werden nachfolgend anhand von Zeichnungen näher erläutert, wobei gleiche oder entsprechende Elemente grundsätzlich mit gleichen Bezugszeichen versehen sind. Es zeigen:
- Fig. 1: Fliesschema zeigend einen erfindungsgemässen Verfahrensablauf;
- Fig. 2: Graphische Darstellung von Ausgabematrizen 5, 5' nach n Simulationsschritten;
- Fig. 3: Verlauf der Realteile Re der zeitkleinsten Eigenwerte 6d über die n Simulationsschritte einer Simulation;
- Fig. 4a: Simulationsergebnisse 9, 9' über alle gestarteten Simulationen;
- Fig. 4b: Lokale lineare Regression der Simulationsergebnisse 9, 9' aus Fig. 4a;
- Fig. 5: Verlauf des Kritikalitätsindexes CI über die Zeit;
- Fig. 6: Tatsächliche und vorhergesagte Restlebensdauer ab dem Einsatz des unumkehrbaren Degradationsprozesses aus Fig. 5;

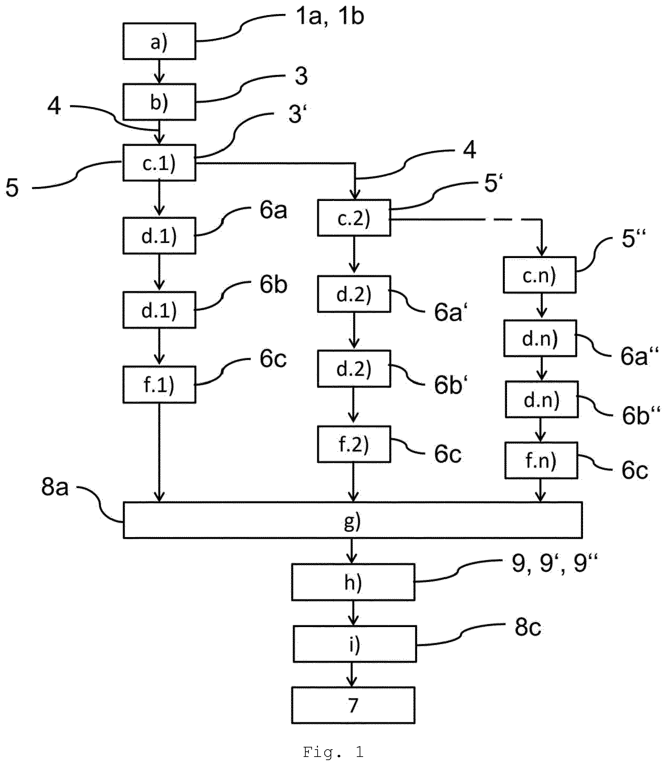

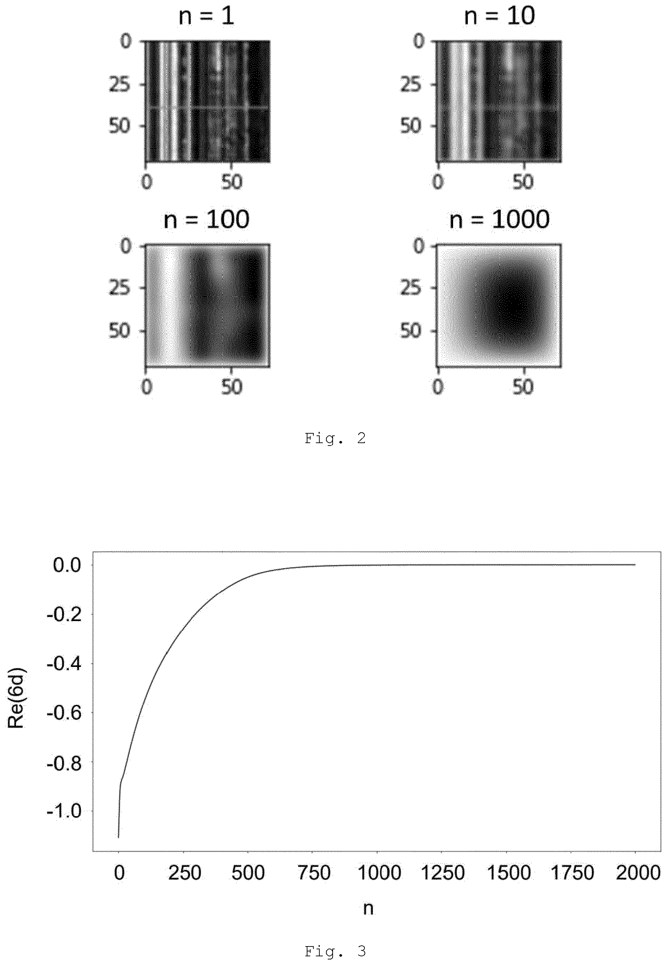

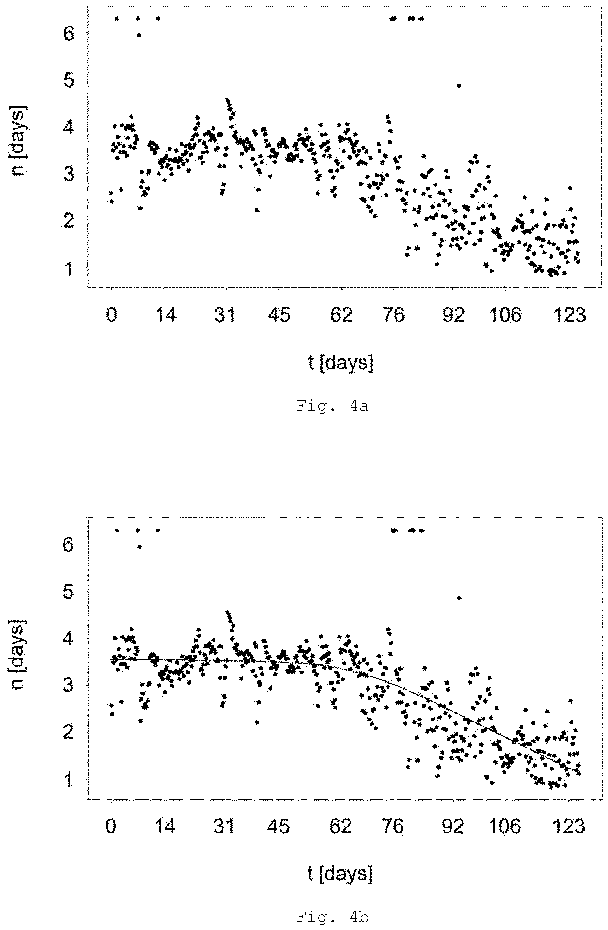

Figur 1 zeigt ein Fliesschema zeigend den Ablauf einer möglichen Ausführungsform des erfindungsgemässen Verfahrens zur Feststellung des Abnutzungsgrades sowie zur Prognose der Restnutzungsdauer einer Dichtungsanordnung eines Kolbenverdichters. Im Anschluss an die in Schritt a) bereitgestellten Schwingungsdaten 1a, welche von mindestens einem der zum Kolbenverdichter gehörenden Schwingungssensoren berücksichtigt werden, oder den daraus berechneten Merkmalen (Features) 1b wird in Schritt b) eine Eingabematrix 3 erstellt. Beispielsweise umfasst dies die Generierung der Datenstruktur aus den gemessenen Schwingungsdaten 1a oder den daraus berechneten Merkmalen (Features) 1b dergestalt, dass eine Spalte in der Eingabematrix 3 die Schwingungsdaten 1a oder die daraus berechneten Merkmale 1b an einer bestimmten Position des Kolbens darstellt und die Reihen der Eingabematrix 3, die Veränderung der Schwingungsdaten 1a oder der Merkmale (Features) 1b über die Zeit abbilden. Hieraus resultiert entweder eine N x N Matrix 3 oder eine N x M Matrix 3. Unterschiedliche Positionen des oder der Schwingungssensoren am Kolbenverdichter erlauben dabei Rückschluss auf die Kritikalität der Degradation und den Typus der Dichtungsanordnung. Im Anschluss an Schritt b) wird in Schritt c) eine Simulation umfassend eine Mehrzahl von Simulationsschritten gestartet. Dazu erfolgt in Schritt c.1) die Zustandsfeld-basierte Simulation der Vibrationsdynamik, im vorliegenden Beispiel unter Anwendung des zeitabhängigen Ginzburg-Landau-Models 4. Korrekt angewandt sind die Ergebnisse der Vielzahl von existierenden Zustandsfeld-Modellen 4, mit denen die Fehlerfortpflanzung in abgeschlossenen Systemen beschrieben werden können, äquivalent. Zur Lösung der partiellen Differentialgleichung wird die diskrete Version des Laplace Operators Δ in jedem Simulationsschritt rekursiv auf die Ausgabematrix 5 des vorherigen Simulationsschritts verwendet. In dem in Figur 1 dargestellten Beispiel wird die Ausgabematrix 5 des ersten Simulationsschrittes c.1) also als Eingabematrix 3' des zweiten Simulationsschrittes c.2) verwendet, welcher wiederum Ausgabematrix 5' ergibt. Figur 2 zeigt die Ausgabematrizen 5, 5' nach einer unterschiedlichen Anzahl an Simulationsschritten in Form einer Heatmap. Die zum Zeitpunkt n = 1 gehörende Abbildung zeigt eine Mehrzahl von weissen und schwarzen Punkten, welche die Werte (Zustände) der Ausgabematrix 5 nach dem ersten Simulationsschritt repräsentiert. Nach einer Anzahl von Simulationsschritten verändert sich die Ausgabematrix nur noch marginal. In der in Figur 1 dargestellten Ausführungsform des erfindungsgemässen Verfahrens wird nach jedem der Schritte c.1) bis c.n) zur erhaltenen Ausgabematrix 5, 5 ', 5" die Laplace Matrix 6a, 6a', 6a" gebildet. Dies kann beispielsweise durch Multiplizieren der jeweiligen Ausgabematrix 5, 5', 5" mit ihrer transponierten Matrix erfolgen (nicht dargestellt). Anschliessend erfolgt die Berechnung der Eigenwerte 6b, 6b', 6b" der jeweiligen Laplace Matrizen 6a, 6a', 6a" eines Simulationsschrittes, was in dem in Figur 1 dargestellten Fliessschema für die Verfahrensschritte d.1), d.2) und d.n) explizit eingezeichnet ist. Für jeden Simulationsschritt erfolgt nun die Auswahl genau einer Kenngrösse 6c aus den berechneten Eigenwerten 6b, 6b', 6b", wie beispielhaft mit den Verfahrensschritten f.1), f.2) und f.n) dargestellt. Bei der ausgewählten Kenngrösse 6c handelt es sich im vorliegend beschriebenen Beispiel um den zweitkleinsten Eigenwert jedes Simulationsschrittes. Figur 3 zeigt exemplarisch den Verlauf der Realteile Re der zweitkleinsten Eigenwerte 6d über die n Simulationsschritte einer Simulation. In Verfahrensschritt g) wird derjenige Simulationsschritt identifiziert, an welchem der zweitkleinste Eigenwert erstmalig unterhalb einen vordefinierten Schwellenwert 8a nahe null fällt. Dieser Simulationsschritt wird in Simulationszeit, insbesondere in Stunden, Minuten oder Sekunden, und gegebenenfalls als Zeitpunkt in der Zukunft, insbesondere als Kalenderdatum, als Simulationsergebnis 9 rückgegeben. Die Simulationszeit berechnet sich aus dem Abstand der gemessenen Werte, also der Anzahl von Abtastzeitpunkten N der Eingabematrix 3, welche aus den Schwingungsdaten 1a oder den daraus berechenbaren Merkmalen 1b generiert wird. Beispielsweise kann die Unterschreitung des vordefinierten Schwellenwertes 8a nach 750 Simulationsschritten n bei Verwendung von Minutenmittelwerten durch Teilen von 750 durch 1440 Minuten (24h x 60min) in eine Zeiteinheit von etwa einem halben Tag umgerechnet werden. In der Folge werden gemäss Verfahrensschritt h) weitere Simulationen unter Wiederholung der Verfahrensschritte b), Erstellen der Eingabematrix 3, c), Durchführung eines Simulationsschrittes 4 und Generierung der Laplace Matrix 6a, d) Berechnung der Eigenwerte 6b, f) Auswahl und Speicherung des zweitkleinsten Eigenwerts 6c, und g) Identifikation der Anzahl an Simulationsschritten bis zur Unterschreitung des Schwellenwerts nahe null und Rückgabe dieses Wertes in Simulationszeit durchgeführt. Schliesslich wird in Verfahrensschritt i) eine Kurve mittels eines geeigneten Verfahrens an die erhaltenen Simulationsergebnisse 9, 9', 9" der durchgeführten Simulationen angepasst und der Zeitpunkt 7 berechnet, zu dem die Kurve eine vordefinierte untere Schranke 8c schneidet. In Figur 4a sind alle gestarteten Simulationen (x-Achse) gegen die Anzahl an Simulationsschritten bis zur Unterschreitung des vordefinierten Schwellenwerts 8a (y-Achse) aufgetragen. In Figur 4b ist beispielhaft die Anpassung der erhaltenen Simulationsergebnisse 9, 9', 9" durch lokale lineare Regression mittels Loess Smoothing über die Gesamtheit der in Figur 4a dargestellten Simulationsergebnisse 9, 9', 9" angegeben. Der Ausfallzeitpunkt bzw. die Restlebensdauer werden aus dem Schnittpunkt der Regressionskurve mit der vordefinierten unteren Schranke 8c, bei der es sich im vorliegenden Beispiel um die x-Achse handelt, berechnet.

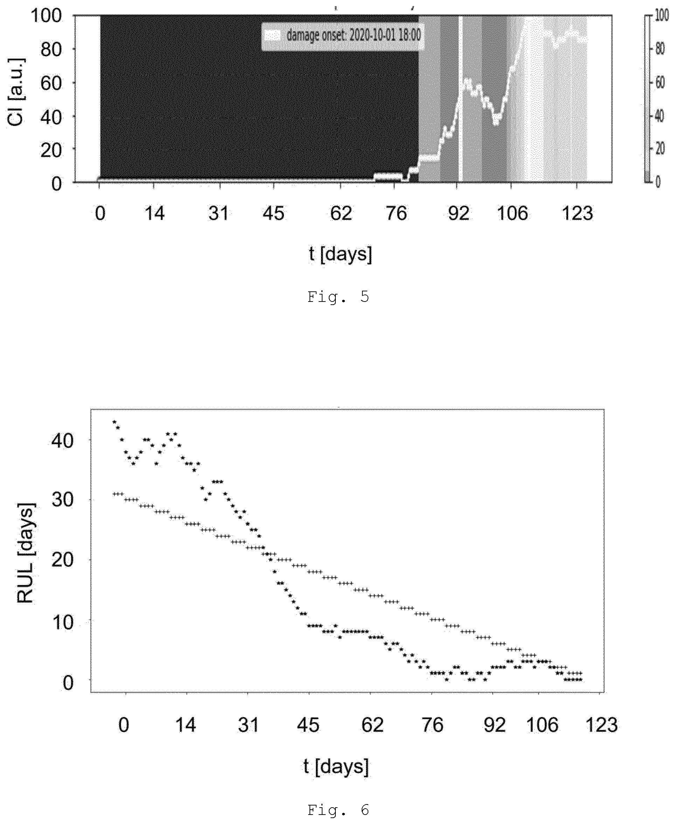

Figur 5 zeigt den Verlauf des Kritikalitätsindexes CI über die Zeit. Anhand des Verlaufs kann bestimmt werden, ab welchem Zeitpunkt ein unumkehrbarer Verschlechterungsprozess in der Dichtungsanordnung einsetzt und die Berechnung der verbleibenden Nutzungsdauer ausgelöst wird. Dieser Zeitpunkt lässt sich anhand der statistischen Verteilung der Simulationsergebnisse bestimmen, insbesondere wenn ein bestimmter Anteil der Simulationsergebnisse unter einem Grenzwert liegt, welcher in Figur 5 den Wert 1 besitzt und durch die weisse Linie nach ca. 92 Tagen (damage onset) markiert ist.

Figur 6 zeigt den Verlauf der Präzision des Vorhersagefehlers über einen Zeitraum von sechs Wochen vor dem tatsächlichen Ende der Nutzungsdauer der Dichtungsanordnung, d.h. zum Eintreten einer Fehlfunktion oder eines Totalausfalls der Dichtungsanordnung, in Kalendertagen. Wie aus Figur 6 ersichtlich ist, fällt die Differenz zwischen dem prognostizierten Ende der Nutzungsdauer und dem tatsächlichen Eintritt des Schadensereignisses insbesondere in den letzten Tag vor dem tatsächlichen Ausfall der Dichtungsanordnung nur noch sehr gering aus, was ein Indikator für eine sehr hohe Genauigkeit des prognostizierten Endes der Nutzungsdauer ist.

## Patentansprüche

1. Computerimplementiertes Verfahren zur Feststellung des Abnutzungsgrades sowie zur Prognose der Restnutzungsdauer einer Dichtungsanordnung (10) eines Kolbenverdichters (11), wobei das Verfahren die folgenden Schritte umfasst:
a) Bereitstellung von Schwingungsdaten (1a) oder daraus berechenbaren Merkmalen (1b) des hin- und hergehenden Teils (12) des Kolbenverdichters (11), welche sich auf Segmente M der Bewegung des hin- und hergehenden Teils (12) des Kolbenverdichters (11) zurückführen lassen;
b) Erstellen einer Eingabematrix (3) aus den Schwingungsdaten (1a) oder den daraus berechenbaren Merkmalen (1b), wobei die Eingabematrix (3) eine durch die Anzahl der Segmente M und die Anzahl von Abtastzeitpunkten N bestimmte Dimension (M x N) aufweist;
c) Durchführung einer Simulation umfassend eine Mehrzahl von Simulationsschritten unter Anwendung eines Modells (4), mit dem die Fehlerfortpflanzung in einem abgeschlossenen System beschrieben werden kann, auf die Eingabematrix (3), wobei jeder Simulationsschritt eine Ausgabematrix (5) erzeugt, und wobei die Ausgabematrix (5) des n-ten Simulationsschritts als Eingabematrix (3') des n+1-ten Simulationsschritts verwendet wird;
d) Optional, Bilden der Laplace Matrix (6a, 6a') zu jeder Ausgabematrix (5, 5'), insbesondere durch Multiplizieren der jeweiligen Ausgabematrix (5, 5') mit ihrer transponierten Matrix (5a, 5a'), und Berechnung der Eigenwerte (6b, 6b') der jeweiligen Laplace Matrix (6a, 6a') ;
e) Optional, Berechnung der normierten Distanz der Ausgabematrix (5') des n+1-ten Simulationsschritts zur Ausgabematrix (5) des n-ten Simulationsschritts;
f) Auswahl genau einer Kenngrösse (6c) aus den Werten der Ausgabematrizen (5, 5') oder aus den berechneten Eigenwerten (6b, 6b') der optional gebildeten Laplace Matrizen (6a, 6a') oder aus den optional berechneten normierten Distanzen;
g) Feststellung der Anzahl an Simulationsschritten, welche durchgeführt werden müssen, bis die ausgewählte Kenngrösse (6c) einen vordefinierten Schwellenwert (8a) nahe null unterschreitet, als Ergebnis (9) der durchgeführten Simulation und Ausgabe dieser Anzahl in einer Zeiteinheit;
h) Wiederholung der Verfahrensschritte a) bis g) in regelmässigen diskreten Zeitabständen zum Erhalt einer Vielzahl von Simulationsergebnissen (9, 9'); und
i) Anpassen einer Kurve an die erhaltenen Simulationsergebnisse (9, 9'), insbesondere durch lokale lineare Regression, und Berechnung des Zeitpunkts (7), zu dem die Kurve eine vordefinierte untere Schranke (8c) schneidet;
wobei die ausgewählte Kenngrösse (6c) ein Mass für die Synchronisation der auf die Segmente M zurückführbaren Schwingungsdaten (1a) oder daraus berechenbaren Merkmale (1b) darstellt,
und wobei der berechnete Schnittpunkt als Indikator für das Eintreten einer Fehlfunktion, insbesondere für einen Totalausfall, und das prognostizierte Ende der Nutzungsdauer der Dichtungsanordnung (10) angesehen wird.

2. Verfahren nach Anspruch 1, wobei als Kenngrösse (6c) der zweitkleinste Eigenwert (6d) der Laplace Matrix (6a) ausgewählt wird, und wobei der vordefinierte Schwellenwert (8a) annähernd null ist, insbesondere weist der Schwellenwert (8a) einen Betrag von 0.000025 auf.

3. Verfahren nach Anspruch 1 oder 2, wobei die bereitgestellten Schwingungsdaten (1a) oder die daraus berechenbaren Merkmale (1b) durch die folgenden Unterschritte erhalten werden:
- Erfassen wenigstens eines Zeitsignals x(t) der Schwingung eines hin- und hergehenden Teils (12) des Kolbenverdichters (11) durch wenigstens einen Schwingungssensor (13);
- Optional, Berechnung der Merkmale (1b) aus dem erfassten Zeitsignal x(t);
- Einteilung des erfassten Zeitsignals x(t) der Schwingung oder der optional berechneten Merkmale (1b) in eine Mehrzahl von Zeitabschnitten (1d) und Bilden der Mittelwerte des erfassten Zeitsignals x(t) oder der optional berechneten Merkmale (1b) in den jeweiligen Zeitabschnitten (1d) zum Erhalten gemittelter Schwingungswerte (2a) oder gemittelter Merkmale (2b);
- Erfassen der Position des hin- und hergehenden Teils (12) des Kolbenverdichters (11) durch wenigstens einen Positionssensor (14) und Bereitstellung der erfassten Positionsdaten (1c);
- Unterteilung der Bewegung des hin- und hergehenden Teils (12) in eine Mehrzahl von, bevorzugt gleich grossen, Segmente M basierend auf den erfassten Positionsdaten (1c); und
- Zuordnung der gemittelten Schwingungswerte (2a) oder der gemittelten Merkmale (2b) zu den Segmenten M der Bewegung derart, dass die jeweiligen gemittelten Schwingungswerte (2a) oder die jeweiligen gemittelten Merkmale (2b) stets denselben Segmenten M der Bewegung des hin- und hergehenden Teils (12) entsprechen.

4. Verfahren nach einem der vorhergehenden Ansprüche, wobei die Prognose des Zeitpunkts (7), zu dem die ausgewählte Kenngrösse (6c) den vordefinierten Schwellenwert (8a) unterschreitet, erst erfolgt, nachdem die Kenngrösse (6c) einen vorbestimmten, das Einsetzen eines unumkehrbaren Verschlechterungsprozesses in der Dichtungsanordnung (10) markierenden Kritikalitätswert (8b) erreicht.

5. Verfahren nach einem der vorhergehenden Ansprüche, wobei es sich bei dem auf die Eingabematrix (3) angewandte Modell (4) um das zeitabhängige Ginzburg-Landau-Modell (TDGL) handelt.

6. Verfahren nach einem der vorhergehenden Ansprüche, ferner umfassend einen Datenübertragungsschritt zur Übertragung der Schwingungsdaten (1a) oder Merkmale (1b) an mindestens eine Bodenstation (15) und/oder zur Übertragung der prognostizierten Restnutzungsdauer der Dichtungsanordnung (10) an eine Benutzerschnittstelle (11a) des Kolbenverdichters (11), wobei wenigstens die Simulationsschritte und die Prognose des Zeitpunkts (7), zu dem die ausgewählte Kenngrösse (6c) einen vordefinierten Schwellenwert (8a) unterschreitet, ganz oder teilweise am Boden mit der Bodenstation (15) durchgeführt werden.

7. Verfahren nach einem der vorhergehenden Ansprüche, wobei es sich bei der Dichtungsanordnung (10) um eine gegen eine Kolbenstange abdichtende Kolbenstangenpackung (10a) oder um ein einen Kompressionsraum begrenzendes Zylinderventil (10b) handelt.

8. Verfahren nach einem der vorhergehenden Ansprüche, wobei die Durchführung des Verfahrens zu einem von einem Nutzer wählbaren Zeitpunkt oder zu festgelegten Zeitabständen automatisiert gestartet wird.

9. Verfahren nach einem der vorhergehenden Ansprüche, ferner umfassend den Unterschritt:
- Übermittlung des identifizierten Zeitpunkts (7) und/oder des prognostizierten Endes der Nutzungsdauer der Dichtungsanordnung (10) an einen Benutzer, insbesondere in Echtzeit; und/oder
- Abschätzung des Abnutzungsgrades der Dichtungsanordnung (10) aus dem Verhalten der Kenngrösse (6c) über die Anzahl der durchgeführten Simulationsschritte und Übermittlung des somit erhaltenen Abnutzungsgrades an einen Benutzer, insbesondere in Echtzeit.

10. Vorbeugendes Instandhaltungssystem (20) zur Verwendung mit einem Kolbenverdichter (11), wobei das vorbeugende Instandhaltungssystem (20) eine Berechnungseinrichtung (21) umfassend mindestens einen Prozessor (22) aufweist, wobei die Berechnungseinrichtung (21) dafür konfiguriert ist:
- Positionsdaten (1c) eines hin- und hergehenden Teils (12) des Kolbenverdichters (11) zu empfangen;
- Schwingungsdaten (1a) oder daraus berechenbare Merkmale(lb) des hin- und hergehenden Teils (12) des Kolbenverdichters (11) zu empfangen;
- Die Schwingungsdaten (1a) oder Merkmale (1b) auf Segmente M der Bewegung des hin- und hergehenden Teils (12) des Kolbenverdichters (11) zuzuordnen;
- Aus den empfangenen Schwingungsdaten (1a) oder Merkmalen (1b) eine Eingabematrix (3) zu erstellen;
- Eine Vielzahl von Simulationen jeweils umfassend eine Mehrzahl von Simulationsschritten unter Anwendung eines Modells (4), mit dem die Fehlerfortpflanzung in einem abgeschlossenen System beschrieben werden kann, auf die Eingabematrix (3) durchzuführen, wobei jeder Simulationsschritt eine Ausgabematrix (5) erzeugt, und wobei die Ausgabematrix (5) des n-ten Simulationsschritts als Eingabematrix (3') des n+1-ten Simulationsschritts verwendet wird;
- Optional die Laplace Matrix (6a) der jeweiligen Ausgabematrix (5) zu bilden und die Eigenwerte (6b) der jeweiligen Laplace Matrix (6a) zu berechnen;
- Optional die normierte Distanz der Ausgabematrix (5') des n+1-ten Simulationsschritts zur Ausgabematrix (5) des n-ten Simulationsschritts zu berechnen;
- Eine Kenngrösse (6c) aus den Werten der Ausgabematrizen (5, 5') oder aus den berechneten Eigenwerten (6b, 6b') der optional gebildeten Laplace Matrizen (6a, 6a') oder aus den optional berechneten normierten Distanzen auszuwählen, wobei die ausgewählte Kenngrösse (6c) ein Mass für die Synchronisation der auf die Segmente M zurückführbaren Schwingungsdaten (1a) oder daraus berechenbaren Merkmale (1b) darstellt;
- Als Ergebnis (9, 9') der jeweils durchgeführten Simulation die Anzahl an Simulationsschritten festzustellen, welche durchgeführt werden müssen, bis die ausgewählte Kenngrösse (6c) einen vordefinierten Schwellenwert (8a) nahe null unterschreitet, und diese Anzahl in einer Zeiteinheit auszugeben;
- Eine Kurve an die erhaltenen Simulationsergebnisse (9, 9') anzupassen, insbesondere durch lokale lineare Regression, und den Zeitpunkt (7) zu berechnen, zu dem die Kurve eine vordefinierte untere Schranke (8c) schneidet, wobei der berechnete Schnittpunkt als Indikator für das Eintreten einer Fehlfunktion und das prognostizierte Ende der Nutzungsdauer der Dichtungsanordnung angesehen wird; und
- Die Restnutzungsdauer der Dichtungsanordnung (10) des Kolbenverdichters (11) auszugeben.

11. Vorbeugendes Instandhaltungssystem (20) nach Anspruch 10, ferner umfassend wenigstens einen Positionssensor (14), welcher zum Erfassen der Position des hin- und hergehenden Teils (12) des Kolbenverdichters (11) ausgebildet ist und kommunikativ mit der Berechnungseinrichtung (21) gekoppelt ist, sowie wenigstens einen Schwingungssensor (13), welcher zum Erfassen eines Zeitsignals x(t) der Schwingung eines hin- und hergehenden Teils (12) des Kolbenverdichters (11) ausgebildet ist und kommunikativ mit der Berechnungseinrichtung (21) gekoppelt ist, wobei die Berechnungseinrichtung (21) dafür konfiguriert ist, das erfasste Zeitsignal x(t) der Schwingung in eine Mehrzahl von Zeitabschnitte (1d) einzuteilen und die gemittelten Schwingungswerte (2a) der jeweiligen Zeitabschnitte (1d) zu bilden, anhand der ermittelten Position die Bewegung des hin- und hergehenden Teils (12) in eine Mehrzahl von, bevorzugt gleich grossen, Segmente M zu unterteilen, und die gemittelten Schwingungswerte (2a) derart zu diesen Segmenten M der Bewegung zuzuordnen, dass die jeweiligen gemittelten Schwingungswerte (2a) stets denselben Segmenten M der Bewegung des hin- und hergehenden Teils (12) entsprechen.

12. Vorbeugendes Instandhaltungssystem (20) nach Anspruch 11, wobei zumindest einer der Schwingungssensoren (13) am dem hin- und hergehenden Teil (12) zugeordneten Zylinderkopf (16) oder Kreuzkopf (17) des Kolbenverdichters (11) angeordnet ist.

13. Kolbenverdichter (11) umfassend ein vorbeugendes Instandhaltungssystem (20) nach einem der Ansprüche 10 bis 12.

14. Kolbenverdichter (11) nach Anspruch 14, ausgebildet als Kolbenverdichter (11) mit vertikaler Kolbenbewegung.

15. Computerlesbares Speichermedium (30), das ein Computerprogramm (31) verkörpert, wobei das Computerprogramm (31) einen computerlesbaren Programmcode (32) umfasst, der, wenn er durch mindestens einen Prozessor (22) eines Computers ausgeführt wird, dazu eingerichtet ist, den Prozessor (22) zur Durchführung des Verfahrens nach einem der Ansprüche 1 bis 9 zu veranlassen.

16. Verwendung des Verfahrens nach einem der Ansprüche 1 bis 9 zur Überwachung der Degradation einer Dichtungsanordnung (10) eines Kolbenverdichters (11) und/oder zur Prognose der Restnutzungsdauer, insbesondere Prognose der verbleibenden Betriebsstunden oder des Austauschdatums, einer Dichtungsanordnung (10) eines Kolbenverdichters (11) und/oder zum Nachstellen der an einer Dichtungsanordnung (10) eines Kolbenverdichters (11) auftretenden Leckage.
